# EUROPÄISCHE PATENTSCHRIFT

(11) **EP 1 024 056 B1**
(45) Veröffentlichungstag und Bekanntmachung des Hinweises auf die Patenterteilung: **31.03.2004**
(21) Anmeldenummer: 00100763.2
(22) Anmeldetag: 15.01.2000
(51) Int. Cl.: B60R 16/02

(54) **System zur Anzeige von Fahrzeugdaten in einem Kraftfahrzeug**
Vehicle data display system in a vehicle
Système d'affichage de données d'un véhicule dans un véhicule

(30) Priorität: 27.01.1999 DE 19903093
(43) Veröffentlichungstag der Anmeldung: 02.08.2000
(73) Patentinhaber: Grundig Car InterMedia System GmbH, 90471 Nürnberg (DE)
(72) Erfinder: Bruch, Herbert, Dr., 90762 Fürth (DE)

(56) Entgegenhaltungen:
- EP-A- 0 701 926
- WO-A-98/09846
- FR-A- 2 667 026
- US-A- 4 442 424
- EHLERS K: "ENTWICKLUNG DER BENUTZUNGSOBERFLACHE IM AUTOMOBIL - BASIS INDIVIDUELLER, AUTOMOBILER MOBILITAT DEVELOPMENT OF THE DRIVER-CAR-INTERFACE WITHIN THE AUTOMOBILE - BASIS OF INDIVIDUAL AUTOMOTIVE MOBILITY" AUTOMATISIERUNGSTECHNISCHE PRAXIS - ATP,DE,OLDENBOURG VERLAG. MUNCHEN, Bd. 36, Nr. 4, 1. April 1994 (1994-04-01), Seiten 9-10,12-14,16, XP000435865 ISSN: 0178-2320

## Beschreibung

Die Erfindung betrifft ein System Vorrichtung zur Anzeige von Fahrzeugdaten in einem Kraftfahrzeug, bei welcher auf einer Anzeigeeinheit die Fahrzeugdaten in graphischer und/oder alphanumerischer Form darstellbar sind.

Es ist bereits bekannt, in einem Kraftfahrzeug Fahrzeugdaten auf einer Anzeigeeinheit darzustellen, beispielsweise Daten über die momentane Fahrtgeschwindigkeit, die momentane Motordrehzahl, die momentane Motortemperatur, den momentanen Benzinverbrauch, den momentanen Tankfüllungszustand, den momentanen Motorölstand, den momentanen Kilometerstand des Kraftfahrzeugs, usw..

Der Ort der jeweiligen Darstellung dieser Daten, die Größe der Darstellung und die Darstellungsform der Daten ist vom Hersteller des jeweiligen Kraftfahrzeuges fest vorgegeben. Beispielsweise erfolgt die Anzeige der momentanen Fahrtgeschwindigkeit in Form einer sogenannten Rundanzeige mittig auf der Anzeigeeinheit, da die momentane Fahrtgeschwindigkeit ein wichtiger Fahrtparameter ist, der vom Fahrer während einer Autofahrt stets beachtet werden muß. Andere Anzeigen, die für den Fahrer nicht so wichtig sind, sind im allgemeinen auf der linken oder rechten Seite der Anzeigeeinheit vorgesehen, so daß der Fahrer den Kopf zumindest leicht drehen muß, um sie erkennen zu können. Der momentane Kilometerstand des Kraftfahrzeugs wird üblicherweise in alphanumerischer Form angezeigt. Der Tankfüllungszustand kann beispielsweise in Form einer Balkendarstellung graphisch dargestellt werden.

Aus US-A-4,442,424 ,die den Oberbegriff des Anspruchs 1 zeight, ist ein Verfahren zum Anzeigen der Arbeitparameter einer Vielzahl von Teilen eines Kraftfahrzeuges an einem Bildschirm bekannt. Hierbei werden vorlaufend die Arbeitsparameter überwacht, die Werte der genannten überwachten Arbeitparameter als Anzeigeelemente in jeweiligen Formaten an dem Bildschirm angezeigt, wobei erfasst wird, wenn die überwachten Parameter abnorm sind und das angezeigte Elemente des wahrgenommenen abnormen Parameters auf die Wahrnehmung irgend eines abnormen Parameters visuell angezeigt wird.

Aus WO 98/09846 und FR-A-2667029 ist bekannt, Parameter eines Systems zur Visualisierung zu verwenden.

Ausgehend von diesem Stand der Technik liegt der Erfindung die Aufgabe zugrunde, ein System zur Anzeige von Fahrzeugdaten mit den im Oberbegriff des Anspruchs 1 angegebenen Merkmalen zu verbessern.

Diese Aufgabe wird durch ein System mit den im Patentanspruch 1 angegebenen Gesamtmerkmalen gelöst. Vorteilhafte Ausgestaltungen und Weiterbildungen ergeben sich aus den abhängigen Ansprüchen.

Der Vorteil der Erfindung besteht neben der wahlweisen Aktivierung der Anzeige eines zweiten Satzes an Fahrzeugdaten darin, dass die Anzeige der Autoradiodaten, Kassettenteildaten, CD-Spielerdaten und/oder Navigationsdaten als Fenstereinblendung, also überlappend zur bestehenden Anzeige des ersten Satzes an Fahrzeugdaten erfolgt. Dadurch wird vermieden, dass sich die Anzeige, in irritierender Weise vollständig ändert, wenn eine zusätzliche Darstellung der vorstehend genannten Informationen auf der Anzeige erfolgen soll.

Weiter wird durch die Fenstereinblendung erreicht, dass für die Darstellung des ersten Satzes an Fahrzeugdaten das Display flächenmäßig vollständig, also optimal und ohne Rücksicht auf eventuelle weitere zur Darstellung vorgesehene Daten ausgenutzt werden kann.

Durch die Möglichkeit, die Darstellungsform, den Darstellungsort und/oder die Größe der Darstellung der Fenstereinblendung mittels der Eingabeeinheit zu verändern, ist eine weitere Voraussetzung geschaffen, die Gesamtanzeige in optimaler Weise übersichtlich zu gestalten.

Die Aktivierbarkeit der Fenstereinblendung mittels der Eingabeeinheit ermöglicht es darüber hinaus, die gewünschte Information nur dann darzustellen, wenn sie benötigt wird.

Es zeigt:
- Figur 1 ein Blockschaltbild mit den wesentlichen Bestandteilen eines Systems zur Anzeige von Fahrzeugdaten,
- Figur 2 ein erstes Beispiel für eine Anzeige und
- Figur 3 ein zweites Beispiel für eine Anzeige.

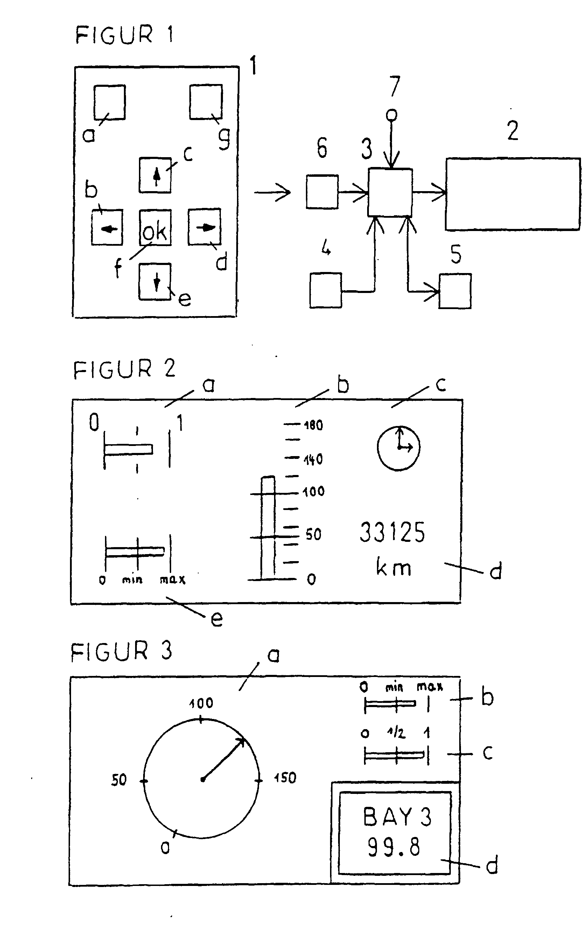

Die Figur 1 zeigt ein Blockschaltbild mit den wesentlichen Bestandteilen eines Systems zur Anzeige von Fahrzeugdaten. Das gezeigte System weist eine Eingabeeinheit 1 auf, bei der es sich im gezeigten Ausführungsbeispiel um einen Fernbedienungsgeber handelt. Alternativ dazu können als Eingabeeinheit aber auch eine am Armaturenbrett des Kraftfahrzeugs fest angebrachte Tastatur, ein Joystick, ein Trackball oder eine Maus verwendet werden.

Der gezeigte Fernbedienungsgeber weist eine Vielzahl von Eingabetasten auf, zu denen eine Initialisierungstaste a, Cursorsteuertasten b, c, d, e, eine Bestätigungstaste f und eine Aufforderungstaste g gehören. Diese Tasten werden - wie unten noch ausgeführt wird - zur Programmierung eines die Anzeigeeinheit 2 steuernden Mikrocomputers 3 verwendet. Dieser ist eingangsseitig mit einem ROM-Speicher 4, einem RAM-Speicher 5, einem Fernbedienungsempfänger 6 und einem Eingangsanschluß 7 verbunden, über welchen ihm signalisiert wird, ob die Zündung des Kraftfahrzeugs eingeschaltet ist oder nicht.

Im ROM-Speicher 4 sind bereits ab Werk Arbeitsprogramme und Unterprogramme abgespeichert, wobei der Benutzer durch eine geeignete Programmierung mittels des Fernbedienungsgebers 1 bestimmte dieser Programme auswählen kann. Weiterhin sind im ROM 4 auch Daten abgespeichert, die Benutzerführungsinformationen entsprechen. Diese werden während des Programmiervorganges auf der Anzeigeeinheit 2 angezeigt, um dem Benutzer bei jedem Programmierschritt Anleitungen oder Auswahlmöglichkeiten zu geben.

Der RAM-Speicher 5 ist insbesondere zur Abspeicherung der vom Benutzer im Rahmen des Programmiervorganges eingegebenen Daten vorgesehen.

Bei diesem Programmiervorgang hat der Benutzer die Möglichkeit, die Darstellungsform der Fahrzeugdaten auf der Anzeigeeinheit 2, bei der es sich vorzugsweise um ein Farb-LCD handelt, nach seinen eigenen Wünschen zu wählen. Weiterhin kann der Benutzer im Rahmen des Programmiervorganges auch den Ort der Darstellung der Fahrzeugdaten auf der Anzeigeeinheit und auch die Größe der Darstellung der Fahrzeugdaten auf der Anzeigeeinheit nach seinen individuellen Bedürfnissen gestalten.

Beispielsweise sind im ROM-Speicher 4 drei verschiedene Datensätze abgespeichert, von denen einer einer Anzeige der momentanen Fahrtgeschwindigkeit in alphanumerischer Form, ein zweiter einer Anzeige der momentanen Fahrtgeschwindigkeit in Form einer Balkendarstellung und ein dritter einer Anzeige der momentanen Fahrtgeschwindigkeit in Form einer Rundanzeige zugeordnet ist. Durch die vom Benutzer durchgeführte Programmierung wird einer dieser Datensätze ausgewählt und zur späteren Anzeige der momentanen Fahrtgeschwindigkeit auf der Anzeigeeinheit 2 verwendet.

Auch für die weiteren Fahrzeugdaten, wie beispielsweise Drehzahldaten, Verbrauchsdaten, Temperaturdaten, Tankfüllungszustandsdaten, Motorölstandsdaten, Abstandsdaten, Kilometerstandsdaten, Reifendruckdaten oder Uhrzeitdaten, wurden bereits werksseitig verschiedene Darstellungsformen vorbereitet. Im Rahmen des genannten Programmiervorganges wählt dann der Benutzer auch für diese Fahrzeugdaten eine seinen persönlichen Wünschen entsprechende Darstellungsform aus.

Zur Einleitung des Programmiervorganges betätigt der Benutzer die Initialisierungstaste a auf dem Fernbedienungsgeber 1. Dieser Tastendruck wird im Fernbedienungsgeber 1 in einen codierten Befehl umgesetzt und zum Fernbedienungsempfänger 6 übertragen, welcher im Armaturenbrett des Kraftfahrzeugs angeordnet ist. In diesem wird der übertragene Fernbedienbefehl decodiert und an den Mikrocomputer 3 weitergeleitet. Dieser ruft dann aus dem ROM 4 zur Realisierung der Benutzerführung eine Übersichtsseite ab und steuert deren Darstellung auf der Anzeigeeinheit 2. In dieser Übersichtsseite ist unter anderem ein Feld "PROGRAMMIERUNG" vorgesehen. Dieses wird vom Benutzer mittels der Cursor-Tasten des Fernbedienungsgebers 1 angefahren. Ist der Cursor auf das genannte Feld gerichtet, dann betätigt der Benutzer die Bestätigungstaste f. Dies wird vom Mikrocomputer 3 erkannt, der daraufhin zur Durchführung des Programmiervorganges Schritt für Schritt weitere Benutzerführungsinformationen aus dem Speicher 4 abruft und für deren Darstellung auf der Anzeigeeinheit 2 sorgt.

In den Bildschirmdarstellungen sind jeweils Auswählfelder vorgesehen, die vom Benutzer mittels der Cursortasten auswählbar sind. Diese Auswählfelder sind jeweils einer bestimmten Darstellungsform zugeordnet.

Weiterhin legt der Benutzer im Rahmen des Programmiervorganges auch den Ort der Darstellung der Fahrzeugdaten auf der Anzeigeeinheit und die Größe der Darstellung der Fahrzeugdaten auf der Anzeigeeinheit nach seinen eigenen Wünschen fest.

Damit die Anzeigeeinheit nicht mit Informationen überladen wird, kann im Rahmen des Programmiervorganges weiterhin festgelegt werden, welche Fahrzeugdaten bei eingeschalteter Zündung permanent auf der Anzeigeeinheit 2 angezeigt werden sollen und welche Fahrzeugdaten erst nach einem Betätigen der Aufforderungstaste g des Fernbedienungsgebers 1 dargestellt werden sollen. Zu den Daten, die permanent angezeigt werden sollen, gehört beispielsweise die momentane Fahrtgeschwindigkeit, da ein Autofahrer über diese ständig informiert sein muß. Zu den Daten, die erst nach einem Betätigen der Aufforderungstaste g dargestellt werden, gehört beispielsweise der aktuelle Kilometerstand des Fahrzeugs, da dessen Kenntnis für das Führen des Kraftfahrzeugs nicht ununterbrochen zur Verfügung stehen muß.

Die Anzeige von Daten, die erst nach dem Betätigen der Aufforderungstaste g dargestellt werden, wird entweder bei einer nochmaligen Betätigung der Taste g wieder gelöscht oder auch nach Ablauf eines durch einen Timer vorgegebenen Zeitintervalles. Die Funktion dieses Timers wird dabei vom Mikrocomputer 3 wahrgenommen.

Eine vorteilhafte Weiterbildung der Erfindung besteht darin, auf der Anzeigeeinheit 2 nicht nur Fahrzeugdaten, sondern auch Autoradiodaten, Kassettenteildaten, CD-Spieler-Daten und/oder Navigationsdaten anzuzeigen. Auch bezüglich dieser Daten hat der Benutzer im Rahmen des Programmiervorganges die Möglichkeit, deren Darstellungsform, Darstellungsort und Darstellungsgröße nach seinen individuellen Vorstellungen zu wählen. Die Einblendung dieser Daten kann, um sie von den Fahrzeugdaten deutlich unterscheidbar zu machen, in Form einer Fenstereinblendung erfolgen.

Eine Fenstereinblendung ist dabei eine Bild-im-Bild-Einblendung, wie sie auch in der Fernsehtechnik oder in der Computertechnik verwendet wird. Auch diese Fenstereinblendung ist in vorteilhafte Weise mittels der Bedieneinheit 1 aktivierbar und entweder mittels der Bedieneinheit oder nach Ablauf eines vorgegebenen Zeitintervalles deaktivierbar. Die Anzeige der genannten Daten kann auch in Form mehrerer Fenstereinblendungen erfolgen.

Nach alledem wird mittels der Erfindung einem Autofahrer die Möglichkeit gegeben, ein Fahrzeugdisplay nach seinen eigenen Vorstellungen zu gestalten: Er kann insbesondere Einfluß nehmen auf die Darstellungsform, den Darstellungsort und die Größe der angezeigten Daten.

Die Figur 2 zeigt ein erstes Beispiel für eine Anzeige. In einem Bereich a der dargestellten Anzeigeeinheit wird der momentane Tankfüllungszustand in Form einer Balkenanzeige, in einem Bereich b die momentane Fahrtgeschwindigkeit ebenfalls in Form einer Balkenanzeige, in einem Bereich c die momentane Uhrzeit in Form einer Rundanzeige, in einem Bereich d der Kilometerstand des Fahrzeugs als alphanumerische Anzeige und in einem Bereich e der Ölstand in Form einer Balkenanzeige dargestellt.

Die Figur 3 zeigt ein zweites Beispiel für eine Anzeige. In einem Bereich a der dargestellten Anzeigeeinheit wird die momentane Fahrtgeschwindigkeit in Form einer Rundanzeige, in einem Bereich b der Ölstand in Form einer Balkenanzeige, in einem Bereich c der Tankfüllungszustand in Form einer Balkenanzeige und in einem Bereich d der Name und die Frequenz des momentan mittels des Autoradios empfangenen Rundfunksenders in alphanumerischer Form dargestellt.

Ein alternatives Ausführungsbeispiel für die Erfindung besteht darin, anstelle eines einzigen LCD-Bildschirms mehrere LCD-Bildschirme unterschiedlicher Größe als Anzeigeeinheit zu verwenden, deren Ansteuerung über einen gemeinsamen Mikrocomputer erfolgt. Auch dabei hat der Benutzer die Möglichkeit, im Rahmen eines Programmiervorganges die Darstellungsform der darzustellenden Daten, die Zuordnung der darzustellenden Daten zu einem bestimmten der Bildschirme und auch die Größe der darzustellenden Daten zu beeinflussen.

Der beschriebene Programmiervorgang ist aus Sicherheitsgründen nur bei ausgeschalteter Zündung möglich. Aus diesem Grund ist der Mikrocomputer 3 eingangsseitig mit einem Anschluß 7 verbunden, über welchen dem Mikrocomputer eine Information darüber zugeführt wird, ob die Zündung des Kraftfahrzeugs eingeschaltet ist oder nicht. Bei eingeschalteter Zündung sperrt der Mikrocomputer 3 den genannten Programmiervorgang und erzeugt beispielsweise auf der Anzeige ein Warnsignal für den Benutzer, welches den Benutzer darauf aufmerksam macht, daß bei eingeschalteter Zündung der Programmiervorgang nicht durchgeführt werden kann.

## Patentansprüche

1. System zur Anzeige von Fahrzeugdaten in einem Kraftfahrzeug, mit einer Anzeigeeinheit, auf welcher Fahrzeugdaten in graphischer und/oder alphanumerischer Form darstellbar sind, wobei das System eine Eingabeeinheit (1) aufweist, mittels derer die Darstellungsform der Fahrzeugdaten, der Ort der Darstellung der Fahrzeugdaten und die Größe der Darstellung der Fahrzeugdaten auf der Anzeigeeinheit (2) veränderbar ist, wobei die Anzeigeeinheit (2) zur Darstellung verschiedenartiger Fahrzeugdaten vorgesehen ist, ein erster Satz von Fahrzeugdaten bei eingeschalteter Zündung des Kraftfahrzeugs permanent dargestellt wird und wobei die Anzeigeeinheit (2) weiterhin zur Anzeige von Autoradiodaten, Kassettenteildaten, CD-Spielerdaten und/oder Navigationsdaten vorgesehen ist und die Darstellungsform, der Darstellungsort und/oder die Größe der Darstellung der Autoradiodaten, Kassettenteildaten CD-Spielerdaten und/oder Navigationsdaten mittels der Eingabeeinheit (1) veränderbar ist,
**dadurch gekennzeichnet, dass**
die Anzeige eines zweiten Satzes von Fahrzeugdaten mittels der Eingabeeinheit (1) aktivierbar und deaktivierbar ist und die Anzeige der Autoradiodaten, Kassettenteildaten, CD-Spielerdaten und/oder Navigationsdaten in einer auf der Anzeigeeinheit (2) vorgesehenen Fenstereinblendung erfolgt.

2. System nach Anspruch 1,
**dadurch gekennzeichnet, dass**
die Fenstereinblendung mittels der Eingabeeinheit (1) aktivierbar oder deaktivierbar ist.

3. System nach Anspruch 1,
**dadurch gekennzeichnet, dass**
die Fenstereinblendung mittels der Eingabeeinheit (1) aktivierbar und mittels eines Timers nach Ablauf eines vorgegebenen Zeitintervalles deaktivierbar ist.

4. System nach einem der vorhergehenden Ansprüche,
**dadurch gekennzeichnet, dass**
auf der Anzeigeeinheit (2) mehrere Fenstereinblendungen aktivierbar sind.

5. System nach einem der vorhergehenden Ansprüche,
**dadurch gekennzeichnet, dass**
die Fahrzeugdaten Fahrtgeschwindigkeitsdaten, Drehzahldaten, Verbrauchsdaten, Temperaturdaten, Tankfüllungszustandsdaten, Motorölstandsdaten, Abstandsdaten, Kilometerstandsdaten, Reifendruckdaten und/oder Uhrzeitdaten sind.

6. System nach einem der vorhergehenden Ansprüche,
**dadurch gekennzeichnet, dass**
die Darstellung der Fahrzeugdaten in graphischer Form als Balkenanzeige und/oder Rundanzeige erfolgt.

7. System nach einem der vorhergehenden Ansprüche,
**dadurch gekennzeichnet, dass**
die Anzeigeeinheit (2) ein einziges Display ist und die Darstellung der Daten in unterschiedlichen Bereichen des Displays erfolgt.

8. System nach einem der Ansprüche 1 bis 6
**dadurch gekennzeichnet, dass**
die Anzeigeeinheit (2) mehrere Displays aufweist und mittels der Eingabeeinheit (1) die Zuordnung der Daten zu einem dieser Displays, die Größe der Darstellung der Fahrzeugdaten und die Darstellungsform der Daten festlegbar ist.

9. System nach einem der vorhergehenden Ansprüche,
**dadurch gekennzeichnet, dass**
die Eingabeeinheit (1) mit einem Mikrocomputer (3) verbunden ist, der zur Steuerung des Systems vorgesehen ist.

10. System nach Anspruch 9,
**dadurch gekennzeichnet, dass**
der Mikrocomputer (3) mit einem nichtflüchtigen Speicher (4) verbunden ist, in welchem verschiedene Datensätze abgespeichert sind, die Darstellungsformen entsprechen.

11. System nach einem der vorhergehenden Ansprüche,
**dadurch gekennzeichnet, dass**
die Eingabeeinheit (1) eine Fernbedienung, eine Eingabetastatur, einen Joystick, einen Trackball oder eine Maus aufweist.

12. System nach einem der vorhergehenden Ansprüche 9 bis 11,
**dadurch gekennzeichnet, dass**
das System einen Datenspeicher (4) aufweist, in welchem Benutzerführungsinformationen abgespeichert sind, und dass der Mikrocomputer (3) einen Benutzerführungsdialog steuert, bei welchem mittels der Bedieneinheit (1) Daten eingebbar sind.

13. System nach einem der vorhergehenden Ansprüche,
**dadurch gekennzeichnet, dass**
die Anzeigeeinheit (2) ein LCD oder mehrere LCD' s aufweist.

## Claims

1. System for displaying vehicle data in an automotive vehicle, having a display unit on which vehicle data can be displayed in graphic and/or alphanumeric form, wherein the system has an input unit (1) by means of which the mode of display of the vehicle data, the position of the display of the vehicle data and the size of the display of the vehicle data on the display unit (2) can be varied, wherein the display unit (2) is provided for displaying vehicle data of different types, and a first set of vehicle data is permanently displayed when the ignition of the automotive vehicle is switched on, and wherein the display unit (2) furthermore is provided for displaying car radio data, cassette section data, CD-player data and/or navigation data and the mode of display, the display position and/or the size of the display of the car radio data, cassette section data, CD-player data and/or navigation data can be varied by means of the input unit (1),
**characterized in that**
the display of a second set of vehicle data can be activated and deactivated by means of the input unit (1) and the car radio data, cassette section data, CD-player data and/or navigation data is displayed in a window insert provided on the display unit (2).

2. System according to Claim 1,
**characterized in that**
the window insert can be activated or deactivated by means of the input unit (1).

3. System according to Claim 1,
**characterized in that**
the window insert can be activated by means of the input unit (1) and can be deactivated by means of a timer after the elapse of a specified time interval.

4. System according to any one of the preceding claims,
**characterized in that**
a plurality of window inserts can be activated on the display unit (2).

5. System according to any one of the preceding claims,
**characterized in that**
the vehicle data is travelling speed data, rotational speed data, consumption data, temperature data, fuel level status data, engine oil level data, distance data, mileage reading data, tyre pressure data and/or time of day data.

6. System according to any one of the preceding claims,
**characterized in that**
the vehicle data is displayed in graphical form as a bar display.and/or dial display.

7. System according to any one of the preceding claims,
**characterized in that**
the display unit (2) is a single display and the data is displayed in different areas of the display.

8. System according to any one of Claims 1 to 6,
**characterized in that**
the display unit (2) has a plurality of displays and the assignment of the data to one of said displays, the size of the display of the vehicle data and the mode of display of the data can be determined by means of the input unit (1).

9. System according to any one of the preceding claims,
**characterized in that**
the input unit (1) is connected to a microcomputer (3) that is provided for controlling the system.

10. System according to Claim 9,
**characterized in that**
the microcomputer (3) is connected to a non-volatile memory (4) in which various data records are stored that correspond to modes of display.

11. System according to any one of the preceding claims,
**characterized in that**
the input unit (1) has a remote control, an input keyboard, a joystick, a tracker ball or a mouse.

12. System according to any one of the preceding Claims 9 to 11,
**characterized in that**
the system has a data memory (4) in which user prompting information items are stored and **in that** the microcomputer (3) controls a user prompting dialogue in which data can be inputted by means of the operating unit (1).

13. System according to any one of the preceding claims,
**characterized in that**
the display unit (2) has an LCD or a plurality of LCDs.

## Revendications

1. Système d'affichage de données d'un véhicule dans un véhicule automobile, comportant une unité d'affichage, sur laquelle des données du véhicule peuvent être représentée sous forme graphique et/ou alphanumérique, et dans lequel le système comporte une unité d'entrée (1), à l'aide de laquelle il est possible de modifier la forme de représentation des données du véhicule, l'emplacement de la représentation des données du véhicule et la taille de la représentation des données du véhicule sur l'unité d'affichage (2), dans laquelle l'unité d'affichage (2) est prévue pour la représentation de différents types de données du véhicule, un premier ensemble de données du véhicule est représenté de façon permanente lorsque l'allumage du véhicule automobile est branché, et l'unité d'affichage (2) est en outre prévue pour l'affichage de données d'autoradio, de données partielles de cassettes, de données de lecteur de disques CD et/ou de données de navigation, et la forme de représentation, l'emplacement de représentation et/ou la taille de la représentation des données de l'autoradio et des données partielles de cassettes, des données du lecteur de disques CD et/ou des données de navigation peuvent être modifiés à l'aide de l'unité d'entrée (1),
**caractérisé en ce que**
l'affichage d'un second ensemble de données du véhicule peut être activé et désactivé à l'aide de l'unité (1) et l'affichage des données de l'autoradio, des données partielles de cassette, des données du lecteur de disques CD et/ou des données de navigation s'effectue avec une insertion de fenêtre prévue sur l'unité d'affichage (2).

2. Système selon la revendication 1, **caractérisé en ce que** l'insertion d'une fenêtre peut être activée ou désactivée au moyen de l'unité d'entrée (1).

3. Système selon la revendication 1, **caractérisé en ce que** l'insertion d'une fenêtre peut être activée à l'aide de l'unité d'entrée (1) et peut être désactivée à l'aide d'une minuterie après l'écoulement d'un intervalle de temps prédéterminé.

4. Système selon l'une des revendications précédentes, **caractérisé en ce que** plusieurs insertions de fenêtres peuvent être activées sur l'unité d'affichage (2).

5. Système selon l'une des revendications précédentes, **caractérisé en ce que** les données du véhicule sont des données de vitesse de déplacement, des données de vitesse de rotation, des données de consommation, des données de température, des données d'état de remplissage du réservoir, des données de niveau d'huile du moteur, des données de distance, des données de distance kilométrique, des données de pression du pneumatique et/ou des données d'horloge.

6. Système selon l'une des revendications précédentes, **caractérisé en ce que** la représentation des données du véhicule s'effectue sous forme graphique à la manière d'un affichage de barres et/ou d'un affichage de cercles.

7. Système selon l'une des revendications précédentes, **caractérisé en ce que** l'unité d'affichage (2) est formée par un seul dispositif d'affichage, et la représentation des données s'effectue dans différentes zones du dispositif d'affichage.

8. Système selon l'une des revendications 1 à 6, **caractérisé en ce que** l'unité d'affichage (2) comporte plusieurs unités d'affichage et l'association des données à l'un de ces dispositifs d'affichage, la taille de la représentation des données du véhicule et la forme de représentation des données peuvent être déterminées au moyen de l'unité d'entrée (1).

9. Système selon l'une des revendications précédentes, **caractérisé en ce que** l'unité d'entrée (1) est reliée à un micro-ordinateur (3), qui est prévu pour la commande du système.

10. Système selon la revendication 9, **caractérisé en ce que** le micro-ordinateur (3) est relié à une mémoire non volatile (4), dans laquelle sont mémorisés différents ensembles de données, qui correspondent à des formes de représentation.

11. Système selon l'une des revendications précédentes, **caractérisé en ce que** l'unité d'entrée (1) comporte une télécommande, un clavier d'entrée, une manette, une boule de commande ou une souris.

12. Système selon l'une des revendications précédentes 9 à 11, **caractérisé en ce que** le système comporte une mémoire de données (4), dans laquelle sont mémorisées des informations de guidage de l'utilisateur, et que le micro-ordinateur (3) commande un dialogue de guidage de l'utilisateur, lors duquel des données peuvent être introduites au moyen de l'unité de commande (1).

13. Système selon l'une des revendications précédentes, **caractérisé en ce que** l'unité d'affichage (2) comporte un dispositif LCD ou plusieurs dispositifs LCD.
